# EUROPÄISCHE PATENTANMELDUNG

(11) **EP 2 043 034 A1**
(43) Veröffentlichungstag der Anmeldung: **01.04.2009**
(21) Anmeldenummer: 08105161.7
(22) Anmeldetag: 27.08.2008
(51) Int. Cl.: G06Q 10/00

(54) **Verfahren und Vorrichtung zum Betreiben eines Infrastrukturnetzes**

(30) Priorität: 19.09.2007 DE 102007044794
(71) Anmelder: Siemens Aktiengesellschaft, 80333 München (DE)
(72) Erfinder: Fuchs, Florian, 80799, München (DE); Mieth, Sebastian, 81667 München (DE); Berger, Michael Dr., 82110 Germering (DE)

(57) **Zusammenfassung**

Die vorliegende Erfindung betrifft das Betreiben eines Infrastrukturnetzes und das Handhaben von Messdaten in einem Infrastrukturnetz unter Verwendung eines Graphen zur Darstellung räumlicher Beziehungen zwischen den Einheiten des Infrastrukturnetzes und einer räumlichen Baumstruktur, die die Kanten des Graphen indiziert.

## Beschreibung

Die vorliegende Erfindung betrifft das Handhaben von Messdaten in einem Infrastrukturnetz, insbesondere einem technischen Infrastrukturnetz, wie zum Beispiel einem Stromnetz, Schienennetz, Straßennetz usw. Die vorliegende Erfindung bezieht sich insbesondere auf ein Verfahren zum Zuordnen von Messdaten zu Einheiten eines Infrastrukturnetzes, auf ein Verfahren zum Suchen von Messdaten von Messungen, die sich auf einen vorgegebenen räumlichen Bereich eines Infrastrukturnetzes beziehen, und auf eine Vorrichtung, ein System, eine Datenstruktur und ein Computerprogramm zum Betreiben eines Infrastrukturnetzes.

### Hintergrund der Erfindung

Unter einem Infrastrukturnetz ist im Allgemeinen ein Satz verbundener struktureller Elemente eines Systems zu verstehen, wobei die strukturellen Elemente und die Verbindungen zwischen diesen einen Rahmen für die gesamte Struktur des Systems liefern. Im Folgenden wird der Begriff der Einheit eines Infrastrukturnetzes verwendet werden, wenn sowohl die strukturellen Elemente als auch die Verbindungen zwischen diesen gemeint sind. Technische Infrastrukturnetze umfassen zum Beispiel Versorgungsnetze wie Strom- oder Abwassernetze, Kommunikationsnetze oder Verkehrsnetze wie Schienen- oder Straßennetze. Um ein möglichst fehlerfreies und sicheres Funktionieren solcher (technischen) Infrastrukturnetze zu gewährleisten, müssen diese permanent überwacht und auf ihre Funktionstüchtigkeit überprüft werden. Dadurch wird es möglich, Probleme in einem (technischen) Infrastrukturnetz schnell zu erkennen und bei Bedarf möglichst schnell einzugreifen, und die aufgetretenen Probleme möglichst zeitnah zu lösen und zu beheben. Um den Zustand eines Infrastrukturnetzes beurteilen zu können, muss eine Vielzahl an Informationen zu den Einheiten des Infrastrukturnetzes berücksichtigt werden. Zu diesem Zweck werden häufig Messvorrichtungen, wie zum Beispiel Sensoren, eingesetzt, die physikalische Phänomene für zumindest einen Bereich des Infrastrukturnetzes messen und die gewonnenen Messwerte an zumindest eine das Infrastrukturnetz betreibende Einheit weiterleiten. Die gewonnenen und weitergeleiteten Messwerte werden dann beim Überwachen und Betreiben des Infrastrukturnetzes berücksichtigt.

Die ermittelten Messwerte werden in der Regel mit einem Ortsbezug von den Messvorrichtungen zur Verfügung gestellt. Der Ortsbezug kennzeichnet den Ort bzw. den Bereich des Infrastrukturnetzes, für den die Messung durchgeführt wurde. Einheiten, die von diesem Bereich des Infrastrukturnetzes umfasst werden, werden als für die Messung relevant bzw. als von der Messung betroffen bezeichnet.

Der Ort bzw. der Bereich des Infrastrukturnetzes, für den die Messung durchgeführt wurde, muss nicht zwingend mit der Position der Messvorrichtung (zum Beispiel des Sensors) übereinstimmen. Eine Messvorrichtung kann Messwerte bereitstellen, die in einem Bereich oder einem Ort liegen, in dem sich die Messvorrichtung befindet. Genauso kann eine Messvorrichtung eingerichtet sein, Messwerte zu von dem eigenen Standort bzw. Bereich unterschiedlichen Orten bzw. Bereichen bereitzustellen, wobei diese Orte bzw. Bereiche vorbestimmt sein können. So zum Beispiel kann eine zum Messen von Temperaturen eingerichtete Messvorrichtung, wie zum Beispiel ein Temperatursensor, Messwerte in Bezug zu dem Ort bzw. Bereich bereitstellen, an dem sich die Messvorrichtung selbst befindet. Eine zum Ermitteln von Wetterprognosen eingerichtete Messvorrichtung, wie zum Beispiel ein Wettersatellit, hingegen liefert Messwerte zu Orten bzw. Bereichen des Infrastrukturnetzes, die keine Überlappung mit ihrer eigenen Position im Infrastrukturnetz aufweisen.

Der Ortsbezug kann somit explizit durch die entsprechende Messvorrichtung bestimmt werden, wenn diese zusätzlich zu dem (den) Messwert(en) auch noch den Bezugsort der Messung liefert, das heißt den Ort bzw. den Bereich des Infrastrukturnetzes, in Bezug auf den die Messung durchgeführt wurde. Der oben beispielhaft vorgestellte Temperatursensor würde als Bezugsort den eigenen Standort bzw. Bereich benennen. Der oben beispielhaft vorgestellte Wettersatellit hingegen würde als Bezugsort einen anderen Ort bzw. Bereich als den eigenen Standort bzw. Bereich für die Messung angeben. In beiden Fällen könnte das ermittelte Ergebnis zum Beispiel die Aussage sein, dass in einem Bereich XY die Temperatur 25°C beträgt.

Alternativ kann der Ortsbezug auch implizit bestehen, falls der Einzugsbereich der Messvorrichtung bekannt ist. Zum Beispiel könnte eine Messvorrichtung wie der Temperatursensor als ermittelten Messwert 30°C liefern, wobei bekannt ist, dass der Temperatursensor an der Position XY (für den Bereich XY oder für einen Bereich Z) installiert ist. In diesem Fall wäre das ermittelte Ergebnis der Messwert von 30°C und die Angabe des entsprechenden Bereichs XY oder Z.

Die auf diese Art und Weise von den Messvorrichtungen ermittelten Messwerte mit Ortsbezug müssen den Einheiten des Infrastrukturnetzes zugeordnet werden, auf die sich die durchgeführten Messungen beziehen. D.h. den Einheiten, die in dem durch den Ortsbezug angegebenen Ort bzw. Bereich des Infrastrukturnetzes liegen. Diese Einheiten können teilweise oder vollständig von dem durch den Ortsbezug angegebenen Ort bzw. Bereich abgedeckt sein.

Bei großflächigen Infrastrukturnetzen werden Messdaten von einer sehr großen Anzahl unterschiedlicher Messvorrichtungen geliefert. Die Menge der Messvorrichtungen in einem Infrastrukturnetz kann dabei sich immer wieder ändern. Es können neue Messvorrichtungen hinzukommen, bestehende Messvorrichtungen ausgetauscht, nicht mehr berücksichtigt oder aus dem System entfernt werden. Des Weiteren können auch Messdaten externer Datenquellen, zum Beispiel Messvorrichtungen und/oder Messdienste anderer Organisationen oder Unternehmen, zum Betreiben des Infrastrukturnetzes eingebunden werden. Es besteht somit Bedarf nach Mitteln (zum Beispiel Systemen und/oder Verfahren), welche auf eine effiziente und flexible Weise die großen Mengen an in einem Infrastrukturnetz anfallenden Messdaten verwalten können und diese den entsprechenden, für die Messdaten relevanten Einheiten des Netzes zuordnen können, um ein umfassendes, effektives und möglichst fehlerfreies Betreiben und Steuern des Infrastrukturnetzes zu ermöglichen. Bei den anfallenden großen Datenmengen, die zu verwalten sind, sind insbesondere die Rechenzeiten und der benötigte Speicherplatz zu optimieren. Des Weiteren sollte eine flexible Handhabung und Einbindung von Datenquellen möglich sein.

Allgemein bekannte Verfahren, die das Betreiben und Steuern von Infrastrukturnetzen unterstützen, sind oft nicht in der Lage, Messdaten von Messvorrichtungen einzubinden, die nicht ein direkter Bestandteil des Infrastrukturnetzes sind. Dieses scheitert oft daran, dass die bisherigen Systeme und Verfahren eine Messdatenverwaltung erlauben, die explizit für das jeweilige Infrastrukturnetz mit den zu diesem Netz dazugehörigen Messvorrichtungen ausgestaltet sind. Das heißt, sie sind explizit für eine bestimmte Art und für einen bestimmten Aufbau eines Infrastrukturnetzes ausgestaltet und berücksichtigen nur solche Messdaten, die von Messvorrichtungen bereitgestellt werden, die fest in dem Infrastrukturnetz eingebunden und somit wohlbekannt sind. Diese in dem Infrastrukturnetz fest eingebundenen Messvorrichtungen sind in der Regel statisch mit dem gesamten System verbunden, das heißt, der Einfluss der Messvorrichtung auf Bestandteile bzw. die Einheiten der Infrastruktur ist von Experten ermittelt worden.

Messsysteme (Messvorrichtungen und/oder Messdienste) werden jedoch oft von unterschiedlichen Organisationen bzw. Unternehmen betrieben. Die jeweiligen Messdaten werden dann von den jeweiligen Organisationen oder Unternehmen verwaltet. Aufgrund der verschiedenen Datenformate und der statischen Natur des Betreibens von Infrastrukturnetzen wird oft von einer Zuordnung externer Messdaten zu den Einheiten eines Infrastrukturnetzes abgesehen, da eine solche Einbindung aufwendige Modifikationen und Anpassungen der bestehenden Systeme mit sich bringen würde.

Auch wenn Messdaten externer Messvorrichtungen in ein Infrastrukturnetz integriert werden, ist die resultierende Lösung nicht ohne umfassende Modifikationen und Anpassungen auf andere Infrastrukturnetze und andere Systeme übertragbar.

Als ein Beispiel dafür kann das so genannte TDAD-System genannt werden (D.J. Dailey, Traffic Data Acquisition and Distribution (TDAD), Washington State Transportation Center - TRAC/WSDOT, Final Technical Report, WA-RD 484.1, Mai 2002.). Mittels des TDAD wird eine Vielzahl von Straßensensoren zur Verkehrsanalyse herangezogen. Dabei kombiniert eine zentrale Einheit die Messdaten aller Sensoren in einem regelmäßigen Abstand von 20 Sekunden, wobei die kombinierten Daten in eine Tabelle einer Datenbank in Form eines Datenblocks in jeweils eine Zeile geschrieben werden. Datenanalysealgorithmen, die das Betreiben des Verkehrsinfrastrukturnetzes im TDAD unterstützen, sind somit konzipiert, nur mit dieser bestimmten Datenbank zu arbeiten, deren Aufbau explizit auf die Besonderheiten und auf dem Aufbau des in ihr modellierten Verkehrsinfrastrukturnetzes ausgerichtet ist. Um den Ansatz des TDAD Systems für andere Infrastrukturnetze (zum Beispiel Stromnetze, Schienennetze oder Kommunikationsnetze) anwenden zu können, müsste eine entsprechende neue Datenbank konzipiert werden und es müssten neue auf das jeweilige Infrastrukturnetz abgestimmte Datenanalyseverfahren entwickelt werden.

Es besteht somit der Bedarf nach flexiblen, vielseitig einsetzbaren und generischen Systemen, welche die oben genannten Probleme lösen.

Des Weiteren werden vermehrt zum Betreiben von Infrastrukturen mobile bzw. bewegliche Messvorrichtungen (zum Beispiel Sensoren) eingesetzt, die keinen festen Ortsbezug aufweisen, sondern sich im Infrastrukturnetz bewegen, zum Beispiel auf Verbindungen des Infrastrukturnetzes, und immer wieder am aktuellen Standort Messungen durchführen und die Messdaten dem die Infrastruktur betreibenden System ermitteln. Solche mobilen Messvorrichtungen erlauben eine umfassendere Analyse des Infrastrukturnetzes. Die bisherigen Verfahren bieten jedoch aufgrund ihres statischen Charakters oft keine Unterstützung für die Handhabung und Berücksichtigung solcher von mobilen Messvorrichtungen bereitgestellten Messdaten. Es sind somit weiterhin Systeme gefragt, die eine effektive und flexible Handhabung von Messdaten erlauben, die von mobilen Messvorrichtungen ermittelt worden sind.

### Zusammenfassung der Erfindung

Die Aufgabe der vorliegenden Erfindung besteht nun darin, ein verbessertes Betreiben eines Infrastrukturnetzes zu ermöglichen.

Diese Aufgabe wird mittels eines Verfahrens zum Zuordnen von Messdaten zu Einheiten eines Infrastrukturnetzes gelöst, wobei das Infrastrukturnetz als Einheiten eine Menge struktureller Elemente, die durch die strukturellen Elemente darstellende Knoten eines Graphen repräsentiert werden, sowie eine Menge von Verbindungen zwischen den strukturellen Elementen umfasst, wobei die Menge von Verbindungen durch die Verbindungen zwischen den strukturellen Elementen darstellende Kanten des Graphen repräsentiert wird, mit den Schritten: Bereitstellen einer räumlichen Baumstruktur, welche die Kanten des Graphen indizierende Blattknoten aufweist, Ermitteln mittels der räumlichen Baumstruktur mindestens einer Einheit des Infrastrukturnetzes, die von einer in dem Infrastrukturnetz durchgeführten Messung betroffen ist, wobei die durchgeführte Messung einen Ortsbezug aufweist und zumindest einen Messwert mit dem Ortsbezug bereitstellt und Zuordnen eines Wirkungswerts der mindestens einen Einheit, wobei der Wirkungswert anzeigt, zu welchem Anteil die durchgeführte Messung für die mindestens eine Einheit relevant ist.

Eine Ausnahme zu dieser Abfolge stellt der folgende Ausnahmefall dar: Keine Einheit des Infrastrukturnetzes kann für den oben genannten Messwert ermittelt werden. Eine solche Messung ist für die Infrastruktur aber irrelevant und wird daher typischerweise verworfen. Dieser Ausnahmefall kann eintreten, wenn sich zum Beispiel ein Sensor an Bord eines Flugzeuges befindet, welches zum Beispiel auf dem Weg zwischen zwei Teilen eines Infrastrukturnetzes über (im Sinne des Infrastrukturnetzes) unerschlossenes Gebiet fliegt und dennoch kontinuierlich Messdaten liefert. Im Folgenden wird ausschließlich von dem Normalfall ausgegangen, also der Existenz von mindestens einer Einheit des Infrastrukturnetzes pro durchgeführte Messung ausgegangen.

Die oben genannte Aufgabe wird ferner mittels eines Verfahrens zum Suchen von Messdaten von Messungen, die sich auf einen vorgegebenen räumlichen Bereich eines Infrastrukturnetzes beziehen, gelöst, wobei die Messdaten nach dem vorstehend skizzierten und nachfolgend detaillierter beschriebenen Verfahren den Einheiten des Infrastrukturnetzes zugeordnet sind und wobei zum Suchen von Messdaten die räumliche Baumstruktur verwendet wird.

Die Aufgabe wird des Weiteren mittels eines Verfahrens zum Betreiben eines Infrastrukturnetzes gelöst, wobei das Verfahren das Bereitstellen eines Graphen und einer räumlichen Baumstruktur aufweist, wobei das Infrastrukturnetz als Einheiten eine Menge struktureller Elemente, die durch die strukturellen Elemente darstellende Knoten des Graphen repräsentiert werden, sowie eine Menge von Verbindungen zwischen den strukturellen Elementen umfasst, wobei die Menge von Verbindungen durch die Verbindungen zwischen den strukturellen Elementen darstellende Kanten des Graphen repräsentiert wird, und wobei die .räumliche Baumstruktur die Kanten des Graphen indizierende Blattknoten aufweist. Der Graph und die räumliche Baumstruktur können dabei für zumindest einen der folgenden Schritte bereitgestellt werden: Zuordnen von ortsbezogenen Messdaten zu Einheiten eines Infrastrukturnetzes und Suchen von Messdaten zu Einheiten eines Infrastrukturnetzes.

Die oben genannte Aufgabe wird auch mittels einer Vorrichtung zum Betreiben eines Infrastrukturnetzes gelöst, wobei das Infrastrukturnetz als Einheiten eine Menge struktureller Elemente, die durch die strukturellen Elemente darstellende Knoten eines Graphen repräsentiert werden, sowie eine Menge von Verbindungen zwischen den strukturellen Elementen aufweist, wobei die Menge von Verbindungen durch die Verbindungen zwischen den strukturellen Elementen darstellende Kanten des Graphen repräsentiert wird, mit einer Datenverwaltungseinrichtung, die ausgebildet ist, eine räumliche Baumstruktur zu verwalten, welche die Kanten des Graphen indizierende Blattknoten aufweist, mit einer Ermittlungseinrichtung, die ausgebildet ist, mittels der räumlichen Baumstruktur mindestens eine Einheit des Infrastrukturnetzes, die von einer in dem Infrastrukturnetz durchgeführten Messung betroffen ist, zu ermitteln, wobei die durchgeführte Messung einen Ortsbezug aufweist und zumindest einen Messwert mit dem Ortsbezug bereitstellt, und mit einer Zuordnungseinrichtung, die ausgebildet ist, einen Wirkungswert der mindestens einen Einheit zuzuordnen, wobei der Wirkungswert anzeigt, zu welchem Anteil die durchgeführte Messung für die mindestens eine Einheit relevant ist.

In Bezug auf die Verwaltung des Graphen kann die Vorrichtung entweder eine weitere zum Verwalten des Graphen ausgebildete Datenverwaltungseinrichtung aufweisen oder die die räumliche Baumstruktur verwaltende Datenverwaltungseinrichtung ist derart ausgebildet, dass sie auch den Graphen verwaltet.

Ferner, kann die Vorrichtung auch eine Sucheinrichtung aufweisen, die ausgebildet ist, Messdaten von Messungen, die sich auf einen vorgegebenen räumlichen Bereich eines Infrastrukturnetzes beziehen, zu suchen, wobei die Messungen den Einheiten des Infrastrukturnetzes durch die Zuordnungseinrichtung zugeordnet sind und wobei die Sucheinrichtung ausgebildet ist, die räumliche Baumstruktur zum Suchen von Messdaten zu verwenden.

Zusätzlich wird die Aufgabe mittels einer Vorrichtung zum Betreiben eines Infrastrukturnetzes mit einer Bereitstellungseinrichtung, die ausgebildet ist, einen Graphen und eine räumliche Baumstruktur bereitzustellen gelöst, wobei das Infrastrukturnetz als Einheiten eine Menge struktureller Elemente, die durch die strukturellen Elemente darstellende Knoten des Graphen repräsentiert werden, sowie eine Menge von Verbindungen zwischen den strukturellen Elementen aufweist, wobei die Menge von Verbindungen durch die Verbindungen zwischen den strukturellen Elementen darstellende Kanten des Graphen repräsentiert wird und wobei die räumliche Baumstruktur die Kanten des Graphen indizierende Blattknoten aufweist.

Dabei kann die Bereitstellungseinrichtung ausgebildet sein, den Graphen und die räumliche Baumstruktur zum Zuordnen von ortsbezogenen Messdaten zu Einheiten eines Infrastrukturnetzes bereitzustellen.

Die Bereitstellungseinrichtung der Vorrichtung kann auch ausgebildet sein, den Graphen und die räumliche Baumstruktur zum Suchen von Messdaten zu Einheiten eines Infrastrukturnetzes bereitzustellen.

Des Weiteren wird die Aufgabe mittels eines Systems zum Betreiben eines Infrastrukturnetzes mit zumindest einer der erfindungsgemäßen Vorrichtungen gelöst.

Die Aufgabe wird auch mittels einer Datenstruktur zum Betreiben von für ein Infrastrukturnetz relevanten Informationen gelöst, wobei die Datenstruktur einen Graphen und eine räumliche Baumstruktur aufweist, wobei das Infrastrukturnetz als Einheiten eine Menge struktureller Elemente, die durch die strukturellen Elemente darstellende Knoten des Graphen repräsentiert werden, sowie eine Menge von Verbindungen zwischen den strukturellen Elementen aufweist, wobei die Menge von Verbindungen durch die Verbindungen zwischen den strukturellen Elementen darstellende Kanten des Graphen repräsentiert wird, und wobei die räumliche Baumstruktur die Kanten des Graphen indizierende Blattknoten aufweist.

Zusätzlich wird die Aufgabe auch mittels eines Computerprogramms gelöst, das eine Kodierung aufweist, mittels der Schritte zumindest eines der oben skizzierten erfindungsgemäßen Verfahren ausgeführt werden, also des Verfahrens zum Zuordnen von Messdaten zu Einheiten eines Infrastrukturnetzes, des Verfahrens zum Suchen von Messdaten von Messungen und des Verfahrens zum Betreiben eines Infrastrukturnetzes, das Bereitstellen eines Graphen und einer räumlichen Baumstruktur aufweist. Das Computerprogramm kann auf einem Datenträger gespeichert sein.

Vorteilhafte Ausgestaltungen und Weiterbildungen der Erfindung ergeben sich aus den weiteren Unteransprüchen in Zusammenschau mit den Figuren der Zeichnung.

Das Verwenden eines Graphen in Verbindung mit der räumlichen Baumstruktur (die Blattknoten der räumlichen Blattstruktur indizieren die Kanten des Graphen) erlaubt das Gestalten eines generischen Ansatzes, durch das beliebige Arten von Infrastrukturnetzen ohne aufwendige Modifikationen modelliert werden können und durch das Messdaten von verschiedenartig angebotenen (externen und/oder internen) und verschiedenartig aufgebauten (mobilen und/oder fest installierten) Messvorrichtungen zum Betreiben des jeweiligen Infrastrukturnetzes herangezogen werden können.

Das Verwenden eines Graphen erlaubt eine effektive und generische Darstellung der Einheiten eines Infrastrukturnetzes, die schnelle Zugriffsmöglichkeiten auf die Einheiten bietet. Durch das Verwenden einer räumlichen Baumstruktur, welche insbesondere für Indizierungszwecke eingesetzt wird, wird ein schnelles Auffinden von relevanten Bereichen und/oder Einheiten eines Infrastrukturnetzes erlaubt. Dadurch, dass in der räumlichen Baumstruktur nur Kanten des Graphen, das heißt, eine Teilmenge statt der Gesamtmenge der Einheiten des Infrastrukturnetzes, indiziert werden, wird auch eine bessere Nutzung der Speicherressourcen ermöglicht. Das Auffinden relevanter struktureller Elemente bedeutet bei ermittelten Verbindungen lediglich einen konstanten Zusatzschritt - Abfrage der durch die Verbindung verbundener Elemente.

Der ermittelten Einheit des Infrastrukturnetzes wird ein Wirkungswert zugewiesen, der angibt, zu welchem Anteil die durchgeführte Messung für diese Einheit relevant ist. Dadurch wird eine genauere Bestimmung der in dem Infrastrukturnetz vorliegenden Bedingungen ermöglicht. Statt einer allgemeinen Zuweisung des Messergebnisses der von der Messung erfassten Einheiten, wird das Treffen eine zielgerichtete Aussage über die relevanten Einheiten ermöglicht.

Der Wirkungswert kann mittels einer Wirkungsfunktion, die entsprechend der Art der durchgeführten Messung ausgestaltet ist, bestimmt werden, wodurch eine weitere Verbesserung bei der Bestimmung des Zustandes der Einheiten erreicht wird. Die Wirkungsfunktionen, die räumliche Wirkungsbereiche jeweiliger Messungen bzw. Messwerte angeben, weisen keine starre Handhabung auf, sondern können flexibel je nach eingesetzter Messvorrichtung und je nach Infrastrukturnetzart und -Beschaffenheit entsprechend modifiziert oder neu bestimmt werden.

Das Ermitteln der mindestens einen Einheit kann nicht nur Suchen nach der mindestens einen Einheit sondern auch Suchen nach einer von der durchgeführten Messung betroffenen Menge von Kanten des Graphen in der räumlichen Baumstruktur umfassen. Dabei wird Ortsbezug der durchgeführten Messung berücksichtigt. Die für die Messung relevanten Einheiten werden somit mit einer einzigen Suche ermittelt.

Die zur Ermittlung der mindestens einen Einheit des Infrastrukturnetzes, die von der durchgeführten Messung betroffen ist, bzw. zum Suchen der von der durchgeführten Messung betroffenen Menge von Kanten des Graphen verwendete Baumstruktur ist wie folgt aufgebaut: die Indexknoten der räumlichen Baumstruktur indizieren den jeweils minimal umgebenden räumlichen Bereich von Einheiten des Infrastrukturnetzes von darunterliegenden Teilbäumen, der Wurzelknoten der räumlichen Baumstruktur indiziert wiederum den räumlichen Bereich des Infrastrukturnetzes, der das Infrastrukturnetz minimal umgibt.

Während des Suchens nach der Menge von Kanten werden nur diejenigen Indexknoten und Blattknoten berücksichtigt werden, welche diejenigen räumlichen Bereiche indizieren, die zumindest zum Teil von der durchgeführten Messung betroffen sind. Liegt kein Bereich eines Indexknotens oder eines Blattknotens in dem von der durchgeführten Messung betroffenen Bereich, wird der Indexknoten und die unter ihm liegenden Indexknoten und Blattknoten für die Suche nicht weiter berücksichtigt.

Wenn beim Suchen der von der durchgeführten Messung betroffenen Menge von Kanten ein Indexknoten einen räumlichen Bereich indiziert, der vollständig im von der durchgeführten Messung betroffenen Bereich liegt, werden alle von unter dem Indexknoten liegenden Blattknoten indizierten Kanten in die Menge von Kanten aufgenommen.

Die mindestens eine Einheit, die zu ermitteln ist, kann eine Verbindung darstellen, die von einer Kante aus der Menge von Kanten dargestellt wird, oder ein strukturelles Element sein, das von einem Knoten dargestellt wird, der durch die Kante aus der Menge von Kanten im Graph verbunden wird. Wurde die von der durchgeführten Messung betroffene Menge von Kanten des Graphen mittels der räumlichen Baumstruktur bestimmt, so können die Kanten der Menge einzeln durchgesehen werden, damit für jede dieser Kanten und somit für jede durch die Messung betroffene Verbindung der dazugehörige Wirkungswert zugeordnet wird. Die durch die Messung betroffenen strukturellen Elemente lassen sich von den ermittelten Kanten ableiten, da diese durch Knoten dargestellt werden, welche die Endknoten der Kanten darstellen. Somit können Wirkungswerte entsprechend auch für die strukturellen Elemente (die Knoten) bestimmt werden.

Das Bestimmen des Wirkungswerts kann das Fällen eines Lots von dem Ortsbezug des Messwerts auf die Kante, das Bestimmen der Länge des Lots und das Einbeziehen der Länge des Lots in die Wirkungsfunktion und in das Bestimmen des Wirkungswerts umfassen. Das vom Ortsbezug des Messwerts auf die Kante gezogene Lot repräsentiert diejenige Gerade, die durch den Ortsbezug des Messwerts geht und die Kante senkrecht (das heißt in einem 90°-Winkel) schneidet. Der Lotfußpunkt L ist der Schnittpunkt der Kante mit dem Lot, also derjenige Punkt auf der Kante, dessen Abstand zu dem Ortsbezug des Messwerts ist. Die Länge des Lots ist der Abstand vom Ortsbezug der Messung bzw. dem Messwert zu dem Lotfußpunkt. Auf diese Art und Weise wird eine einfache und zugleich effektive Bestimmung des Wirkungswerts ermöglicht, welche für jede Art von Infrastrukturnetzen eingesetzt werden kann und welche universell für jede Art von Messvorrichtungen (mobilen und fest installierten) und unabhängig von der Art der durchgeführten Messung durchführbar ist. Dabei ist lediglich die Kenntnis des Ortsbezugs notwendig, welche zu den jeweiligen Messvorrichtungen auch immer vorhanden ist.

Die vorliegende Erfindung betrifft somit das Betreiben eines Infrastrukturnetzes und das Handhaben von Messdaten in einem Infrastrukturnetz unter Verwendung eines Graphen zur Darstellung räumlicher Beziehungen zwischen den Einheiten des Infrastrukturnetzes und einer räumlichen Baumstruktur, die die Kanten des Graphen indiziert.

Auf diese Art und Weise wird ein effektives Betreiben eines Infrastrukturnetzes ermöglicht. Beispielhaft sind die folgenden Vorteile zu nennen: die Messungen können flexibel - sowohl mobil als auch durch fest installierte Vorrichtungen bzw. Systeme - durchgeführt werden können, bei dem die Auswertung der Messdaten kann unabhängig von der Art der Messung durchgeführt werden, externe Messdaten können ohne Umbauten des vorliegenden Systems auf eine einfache Art und Weise eingebunden werden, der generische Charakter der vorgestellten Lösung erlaubt eine Umsetzung, welche von der Art und von der Gestaltung des Infrastrukturnetzes unabhängig ist.

### Kurze Beschreibung der Zeichnungen

Die vorliegende Erfindung wird nachfolgend detailliert anhand der in den schematischen Figuren der Zeichnung dargestellten Ausführungsbeispiele näher erläutert. Es zeigen dabei:
- Fig. 1: beispielhaft ein Infrastrukturnetz darstellt, das gemäß der vorliegenden Erfindung als Graph repräsentiert ist;
- Fig. 2: den Aufbau eines Graphen und der räumlichen Baumstruktur für ein Infrastrukturnetz gemäß einem Ausführungsbeispiel der vorliegenden Erfindung zeigt;
- Fig. 3a: eine Wirkungsfunktion gemäß einem Ausführungsbeispiel der vorliegenden Erfindung zeigt;
- Fig. 3b: eine weitere Wirkungsfunktion gemäß einem weiteren Ausführungsbeispiel der vorliegenden Erfindung zeigt;
- Fig. 4: ein Flussdiagramm zeigt, das Schritte zum Zuordnen von Messdaten zu Einheiten eines Infrastrukturnetzes gemäß einem Ausführungsbeispiel der vorliegenden Erfindung aufweist;
- Fig. 5: das Fällen eines Lots zum Bestimmen eines Wirkungswerts gemäß einem Ausführungsbeispiel der vorliegenden Erfindung zeigt;
- Fig. 6: die zugeordneten Wirkungswerte den von einer Messung betroffenen Einheiten des Infrastrukturnetzes gemäß einem Ausführungsbeispiel der vorliegenden Erfindung zeigt; und
- Fig. 7: ein Flussdiagramm zeigt, das Schritte zum Zuordnen von Messdaten zu Einheiten eines Infrastrukturnetzes gemäß einem Ausführungsbeispiel der vorliegenden Erfindung aufweist.

In den Figuren der Zeichnung sind gleiche und funktionsgleiche Elemente und Merkmale, sofern nichts Anderes angegeben ist, mit denselben Bezugszeichen versehen.

### Beschreibung von Ausführungsbeispielen

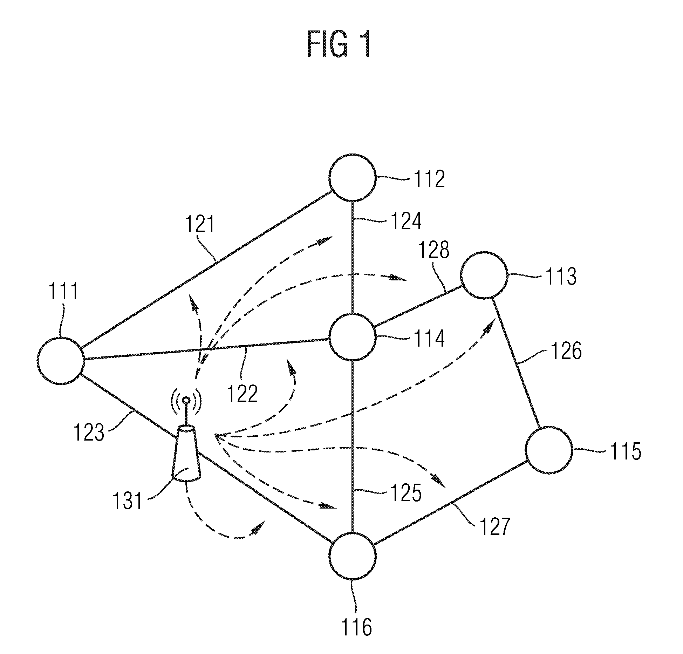

Fig. 1 zeigt beispielhaft ein Infrastrukturnetz, das gemäß der vorliegenden Erfindung als Graph repräsentiert ist. Die Knoten 111, 112, 113, 114, 115, 116 des in Fig. 1 dargestellten Graphen des Infrastrukturnetzes repräsentieren die strukturellen Elemente des Infrastrukturnetzes, die Kanten 121, 122, 123, 124, 125, 126, 127 des Graphen repräsentieren wiederum die Verbindungen zwischen den strukturellen Elementen im Infrastrukturnetz. Die Messvorrichtung bzw. das Messsystem 131 wird eingesetzt, um Messwerte für das Infrastrukturnetz zu ermitteln. Dabei kann es sich sowohl um eine mobile als auch um eine fest installierte Messvorrichtung handeln, des Weiteren kann sie zu dem Infrastrukturnetz gehören oder auch eine Vorrichtung eines externen Unternehmens sein. Die gestrichelten Pfeile deuten an, dass die durch die Messvorrichtung bzw. das Messsystem 131 ermittelten Messdaten bzw. Messwerte sich auf die durch die Knoten 111, 112, 113, 114, 115, 116 repräsentierten Verbindungen im Infrastrukturnetz beziehen können. Die Messdaten werden zusammen mit einem entsprechenden Ortsbezug dem Infrastrukturnetz bzw. einer das Infrastrukturnetz betreibenden Einheit bereitgestellt. Der Ortsbezug kann dabei zum Beispiel als (aktuelle) räumliche Lage oder (aktuelle) geographische (Punkt-) Koordinate der Messvorrichtung bzw. des Meßsystems 131 angegeben werden.

Zu den Messdaten bzw. Messwerten ist anzumerken, dass sie je nach Messung bzw. je nach Art der Messung unterschiedliche Typen aufweisen können. Beispiele für Messungen sind Temperaturmessungen, Windstärkemessungen oder Niederschlagsmessungen. Wird ein Schienennetz als Infrastrukturnetz betrachtet, so können auch Angaben zur aktuellen Abnutzung des Gleiskörpers, die aus der Belastung durch darüberfahrende Züge abgeleitet werden, Messwerte bzw. Messdaten darstellen.

Die in Fig. 1 dargestellte Infrastruktur kann zum Beispiel eine Schieneninfrastruktur sein. In einem Schieneninfrastrukturgraphen können zum Beispiel die Weichen die Knoten und die Gleisstücke die Kanten repräsentieren. In einer Schieneninfrastruktur werden Messwerte mit Ortsbezug unter anderem von Messsystemen an Schienen und Weichen geliefert. Sie können zum Beispiel Informationen zur Belastung der Schiene durch darüberfahrende Züge, Schaltgeschwindigkeit von Weichen liefern oder Informationen aus der Detektion nach überhitzten Achslagern darüberfahrender Züge bereitstellen. Andere Messsysteme können sich wiederum auf Zügen befinden und Messwerte zu den Schienen, über die sie fahren, produzieren. Zusätzlich können auch externe Daten geliefert werden, zum Beispiel von Wetterdienste können Informationen zum Niederschlag oder zur Temperatur bereitstellen.

Ist die in Fig. 1 dargestellte Infrastruktur ein Stromnetz, so können zum Beispiel Kraftwerke, Verteiler usw. die Knoten und die Stromleitungen die Kanten des entsprechenden Infrastrukturgraphen darstellen. Die ortsbezogenen Messungen können in einem solchen Infrastrukturnetz zum Beispiel Überlastung und Verschleiß von Leitungen, Wetterbedingungen wie Schneefall, Frost, Stürme sowie Naturkatastrophen wie Waldbrände und Überflutungen sein.

Ein weiteres Beispiel für eine in Fig. 1 dargestellte Infrastruktur kann ein Straßennetz sein. Der Infrastrukturgraph würde für das Straßennetz zum Beispiel Kreuzungen als Knoten und Straßen als Kanten darstellen. Ortsbezogene Messdaten wären in diesem Fall zum Beispiel für Staus relevante Informationen, Wetterbedingungen wie Schneefall, Regen oder Frost, Straßensperrungen, Objekte auf der Straße usw.

Auch Gebäudepläne, beispielsweise von Flughäfen oder Bahnhöfen, stellen Beispiele für Infrastrukturnetze dar. Hier könnten vordefinierte Punkte und Räume Knoten und Gänge Kanten im Infrastrukturgraphen darstellen. Ortsbezogene Messdaten wären zum Beispiel Anzahl der verkehrenden Personen, Temperatur, Luftqualität, Feuer usw. Für solche Infrastrukturen kann auch die Dreidimensionalität des Infrastrukturgraphen zum Tragen kommen, um zum Beispiel unterschiedliche Stockwerke modellieren zu können. Weitere Anwendungsbereiche könnten auch Megacities darstellen.

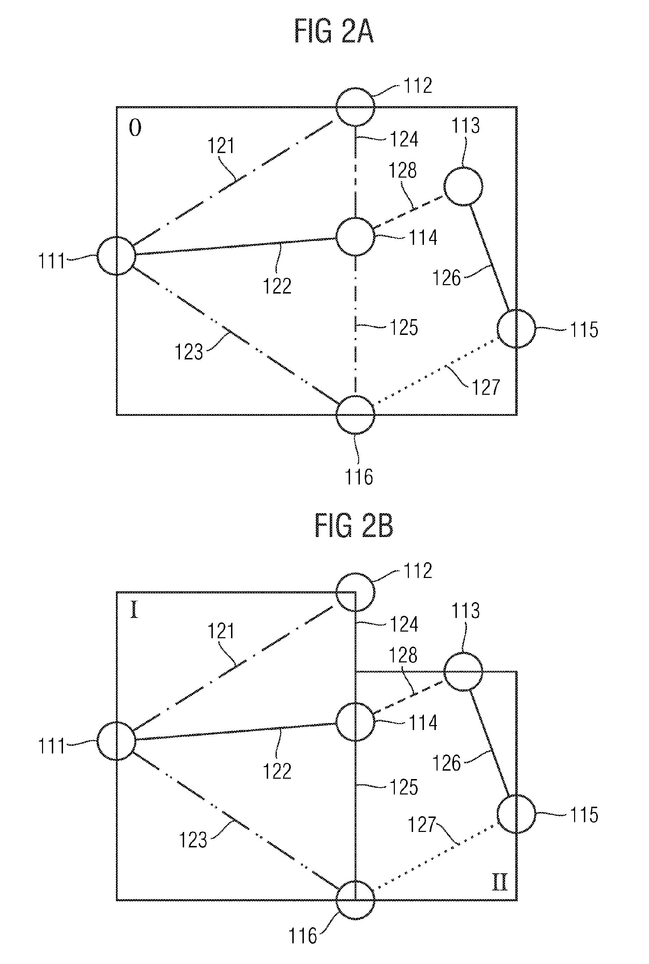

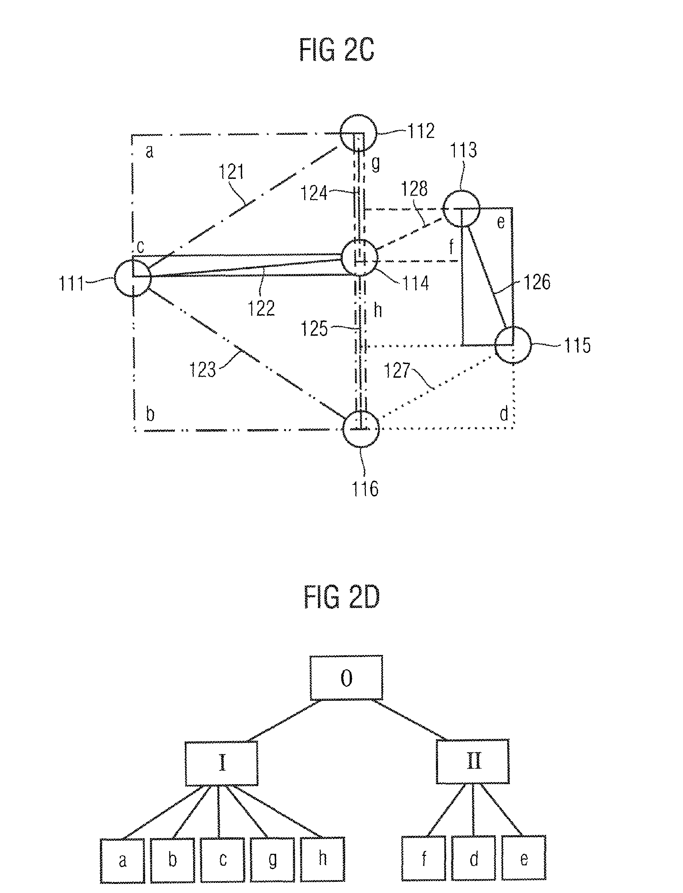

Fig. 2 zeigt den Aufbau eines Graphen und der räumlichen Baumstruktur für ein Infrastrukturnetz gemäß einem Ausführungsbeispiels der vorliegenden Erfindung. Der in Beispielen der Fig. 2 dargestellte Graph entspricht dem in der Fig. 1 dargestellten und oben beschriebenen Graph.

Zur Abstraktion von konkreten Infrastrukturen und zur Gewährleistung eines generischen Ansatzes, wird ein Infrastrukturnetz als Graph mit einer (im allgemeinen Fall) dreidimensionalen Koordinate für jeden Knoten 111, 112, 113, 114, 115 und 116 modelliert. Damit kann sich die Betrachtung auf Mengen von Knoten und Kanten zwischen diesen beschränken. Das Ziel ist nun, zu einer gegebenen Messung mit Ortsbezug und Wirkungsfunktion, die betroffenen Infrastrukturelemente, das heißt die relevanten Kanten im Graph zu ermitteln.

Anzumerken ist, dass bei realen Infrastrukturen ein Infrastrukturgraph sehr groß sein kann. Betrachtet man beispielhaft das Deutsche Schienennetz, so würde die potentielle Knotenmenge allein, ohne die Kanten zu benennen, etwa 6000 Personenbahnhöfe und etwa 74000 Kreuzungen und Weichungen umfassen.

Um derart große Infrastrukturnetze und entsprechend große Infrastrukturgraphen zu betreiben und von Messungen betroffene Einheiten des Infrastrukturnetzes schnell ermitteln zu können, wird gemäß der vorliegenden Erfindung eine geeignete Indexstruktur eingesetzt, nämlich die eines räumlichen (bzw. mehrdimensionalen) Baumes, welcher eine flexible Kodierung von räumlichen (das heißt mehrdimensionalen) Daten gestattet. Beispiele für solche räumlichen Baumstrukturen sind unter anderem R-Bäume, k-D-B-Bäume (bzw. generalized k-dimensional tree bounding-box cell-tree pyramid), R-Bäume, R+-Bäume, Cell-Bäume usw. Der Begriff "räumlich" ist als auf einen (mehrdimensionalen) Raum, Ort oder Bereich bezogen zu verstehen.

Im Folgenden wird die R-Baum-Struktur als Repräsentantin für die räumliche Baumstruktur betrachtet werden. Eine räumliche Baumstruktur bzw. der R-Baum gestattet ein schnelles und effizientes Finden von mehrdimensionalen Objekten, die ein gegebenes Objekt schneiden und beinhalten. Im Falle der Infrastrukturnetze sind solche Objekte die Kanten und die Knoten des Graphs im dreidimensionalen Raum. Der R-Baum ist gemäß des Ausführungsbeispiels der vorliegenden Erfindung derart aufgebaut, dass dieser Kanten des Graphen bzw. Verbindungen zwischen den strukturellen Elementen des Infrastrukturnetzes in seinen Blattknoten indiziert. Die Indexknoten des R-Baums enthalten minimal umgebende Quader der zu indizierenden räumlichen Einheiten, die durch die darunterliegenden Teilbäume zu indizieren sind. Gemäß der vorliegenden Erfindung sind diese räumlichen Einheiten die Kanten des Graphen bzw. Verbindungen zwischen den strukturellen Elementen des Infrastrukturnetzes. Der Wurzelknoten eines R-Baums einspricht dem minimal umgebenden Quader des gesamten durch den Infrastrukturnetz abgedeckten Gebiets oder Raumes und kennt die minimal umgebenden Quader der Indexknoten auf der ersten Ebene.

Wie bereits oben erwähnt, wird durch das Verwenden einer räumlichen Baumstruktur eine Speicherplatzersparnis erreicht. An dieser Stelle muss aber noch zusätzlich ergänzt werden, dass eine solche Indexstruktur wie der räumliche Baum zusätzlich auch verteilt gespeichert werden kann, was einen weiteren Flexibilitätsaspekt mit sich bringt.

Fig. 2a zeigt die oberste Ebene 0, den Wurzelknoten des R-Baums, der das gesamte Infrastrukturnetz bzw. den Infrastrukturgraphen räumlich minimal umfasst. Fig. 2b zeigt die nachfolgende Ebene, die zwei Indexknoten I und II aufweist, welche im Rahmen des Wurzelknotens jeweils einen Bereich des Infrastrukturnetzgraphen minimal umfassen. Der Indexknoten I umfasst minimal einen Bereich mit den Kanten 121, 122, 123, 124 und 125. Der Indexknoten II umfasst minimal einen Bereich mit den Kanten 126, 127 und 128. Fig. 2c zeigt die unterste Ebene des R-Baums, in der die Blattknoten gemäß der vorliegenden Erfindung die Kanten des Graphen bzw. die Verbindungen zwischen den strukturellen Elementen des Infrastrukturnetzes indizieren, das heißt Bereiche aufweisen, die jeweils minimal eine Kante bzw. Verbindung umfassen. Dabei umfasst der Knoten a einen Bereich mit der Kante 121, der Knoten b einen Bereich mit der Kante 123, der Knoten c einen Bereich mit der Kante 122, der Knoten g einen Bereich mit der Kante 124, der Knoten h einen Bereich mit der Kante 125, wobei diese Blattknoten Unterknoten des Indexknotens I sind. Der Indexknoten II weist auf Unterknoten die Knoten f, d und e auf, wobei der Knoten f einen Bereich mit der Kante 128, der Knoten d einen Bereich mit der Kante 127 und der Knoten e einen Bereich mit der Kante 126 umfasst.

Fig. 2d zeigt den durch die erfindungsgemäße räumliche Aufteilung ermittelten räumlichen Baum, der wie oben beschrieben die Kanten des Graphen des Infrastrukturnetzes indiziert.

Gemäß einem Ausführungsbeispiel der vorliegenden Erfindung werden Wirkungswerte den von einer Messung betroffenen Einheiten des Infrastrukturnetzes zugewiesen. Um den räumlichen Wirkungsbereich einer Messung zu ermitteln, wird jedem Typ von Messdaten eine Wirkungsfunktion zugeordnet. Die Wirkungsfunktion gibt an, welcher Anteil des am Bezugspunkt bzw.

Ortsbezug gemessenen Wertes in einer gegebenen Distanz vom Bezugspunkt bzw. Ortsbezug gilt. Die Wirkungsfunktion gibt somit an, wie stark die Relevanz der Messung bzw. der Messwerte in Abhängigkeit der Distanz vom Bezugspunkt abfällt. Bei physikalischen Phänomenen mit großem Wirkungsradius, wie zum Beispiel einem Regengebiet, gibt es auch in größerer Entfernung vom Bezugspunkt eine Auswirkung. Bei räumlich beschränkten Phänomenen, wie zum Beispiel Helligkeit, ist der Wirkungsbereich entsprechend klein.

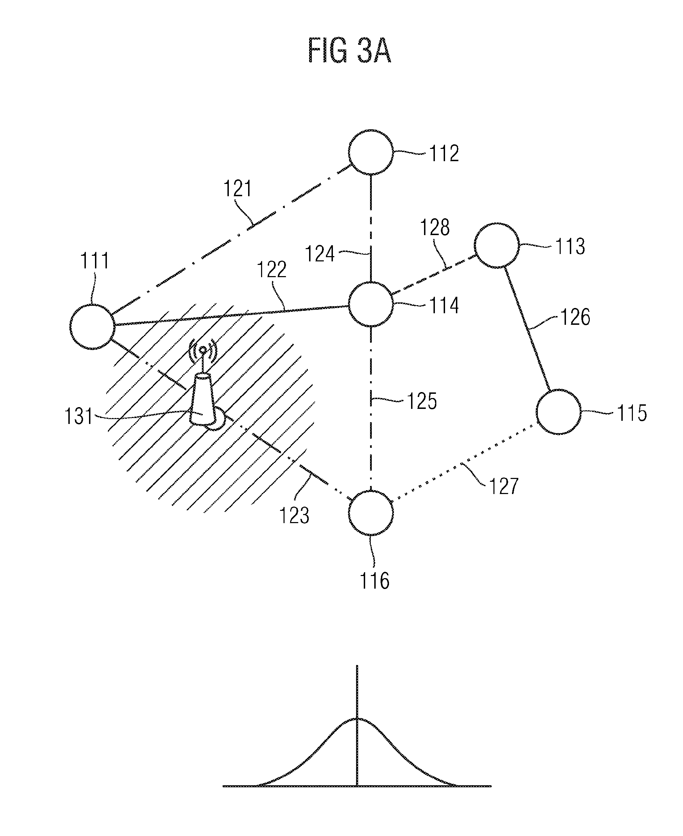

Fig. 3a zeigt ein Ausführungsbeispiel für eine Wirkungsfunktion für eine Messung, die ein räumlich beschränktes Phänomen misst, zum Beispiel Helligkeit, oder feststellt, zum Beispiel Objekte auf der Straße. Die Wirkungsfunktion weist den größten Wirkungswerte denjenigen Einheiten des Infrastrukturnetzes zu, die zu dem Bezugspunkt bzw. Ortsbezug am nächsten liegen. Je weiter eine Einheit vom Bezugspunkt bzw. Ortsbezug entfernt ist, desto geringer wird der Wirkungswert sein, das heißt desto geringer ist der Einfluss der Messung auf die Einheit. Diese Zusammenhänge sind auch durch die Funktionskurve der Fig. 3a dargestellt, wobei die vertikale Achse den Einflussgrad der Messung oder den Wirkungswert und die horizontale Achse die Entfernung der Einheit von dem Bezugspunkt der Messung beschreibt.

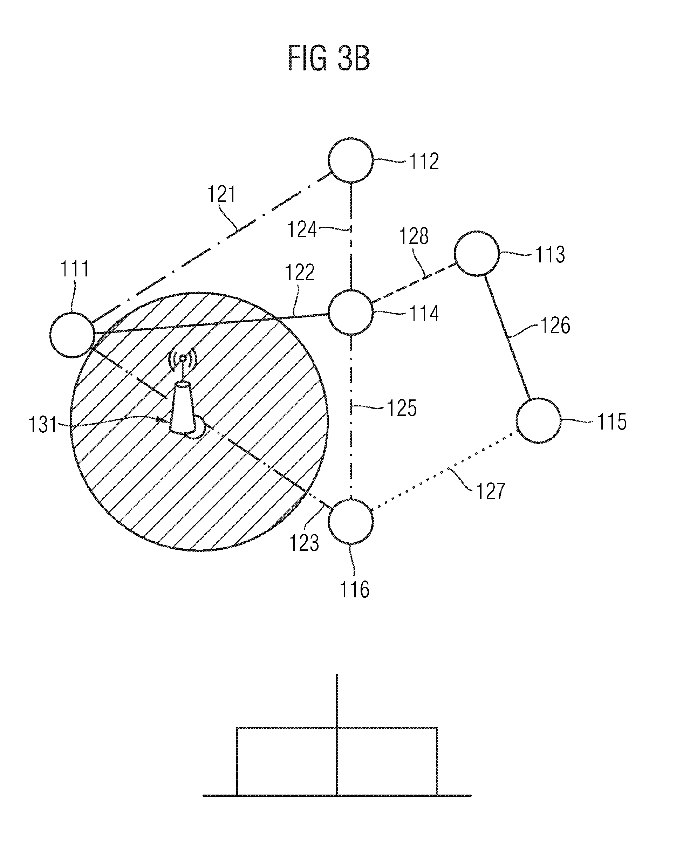

Fig. 3b zeigt wiederum ein Ausführungsbeispiel für eine Wirkungsfunktion für eine Messung, die ein Phänomen mit einem großen Wirkungsradius misst oder feststellt, zum Beispiel Temperatur, Windstärke oder Niederschlag. Hier ist die Wirkung der Messung innerhalb des Wirkungsradius gleich. Das heißt, Einheiten des Infrastrukturnetzes, die innerhalb des Wirkungsradius liegen, wird der gleiche Wirkungswert zugewiesen. Dieser Zusammenhang ist durch die Funktionskurve der Fig. 3b dargestellt, wobei die Vertikale Linie den Einflussgrad der Messung bzw. den Wirkungswert angibt.

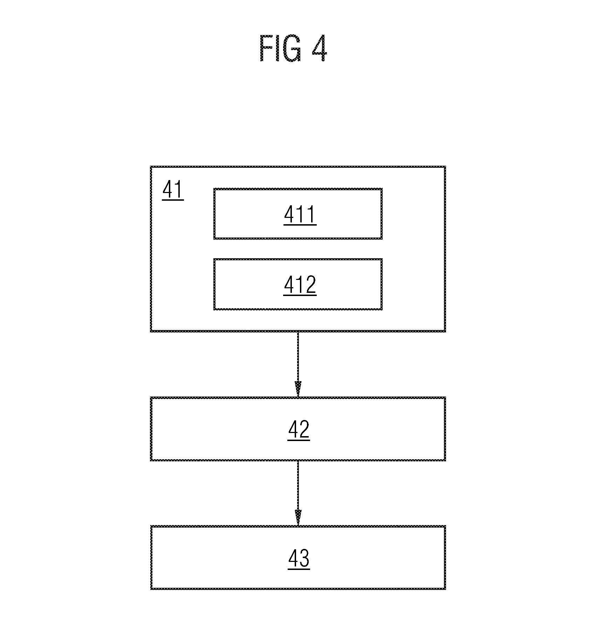

Fig. 4 zeigt ein Flussdiagramm mit Schritten zum Zuordnen von Messdaten zu Einheiten eines Infrastrukturnetzes gemäß einem Ausführungsbeispiel der vorliegenden Erfindung.

In Schritt 41 wird ein Graph, der das Infrastrukturnetz räumlich darstellt, und eine räumliche Baumstruktur, welche die Kanten des Graphen indiziert, bereitgestellt. Der Schritt 41 weist beispielhaft das Bereitstellen 411 des Graphen und das Bereitstellen der räumlichen 412 Baumstruktur als zwei einzelne Schritte auf. Die Schritte 411 und 412 können aber auch ein einzelner Schritt sein.

In Schritt 42 wird mittels der räumlichen Baumstruktur mindestens eine Einheit des Infrastrukturnetzes ermittelt, die von einer in dem Infrastrukturnetz durchgeführten Messung mit einem Ortsbezug betroffen ist, wobei die durchgeführte Messung zumindest einen Messwert mit dem Ortsbezug bereitstellt.

Dazu kann eine Suche in der räumlichen Baumstruktur wie folgt durchgeführt werden. Am Wurzelknoten der räumlichen Baumstruktur wird durch Schnittbildung zwischen dem Wirkungsbereich des Messwertes (zum Beispiel eine Kugel definiert durch die Wirkungsfunktion) und den minimal umgebenden Quadern der darunterliegenden Teilbäume ermittelt, für welche Teilbäume der Messwert und seine Auswirkungen relevant sind. Für jedes so ermittelte Blatt wird nun die konkrete Kante im Infrastrukturnetz auf Schnitt mit dem Wirkungsbereich des Messwertes geprüft. Falls ja, hat der Messwert eine Auswirkung auf diese Kante und die Kante ist relevant. Durch dieses Vorgehen wird sehr schnell die Menge der in Frage kommenden Graphobjekte bzw. der relevanten Einheiten des Infrastrukturnetzes ermittelt. Zum Beispiel könnten bei einer Repräsentation des deutschen Schienennetzes durch die Tests am Wurzelknoten bereits alle Bahnhöfe und Steckenabschnitte in Norddeutschland aussortiert werden, falls eine Messvorrichtung oder Messsystem wie ein Sensor Daten für München liefert und sein Wirkungsgrad nicht nach Norddeutschland hineinreicht.

In Schritt 43 wird ein Wirkungswert mindestens einen Einheit aus der Menge der der relevanten Einheiten des Infrastrukturnetzes zugewiesen. Dabei wird für jede relevante Kante das Ausmaß der Auswirkung der Messung festgestellt. Dies wird mithilfe der Wirkungsfunktion für den Typ des Messwerts berechnet. Dazu wird ein Lot vom Bezugspunkt des Messwerts auf die Kante gefällt. Die Länge des Lots wird in die Wirkungsfunktion eingesetzt und ergibt den Wert (das Gewicht), mit dem der Messwert der Kante zugeordnet wird. Wenn Daten zum geographischen Profil in der Umgebung der Kante verfügbar sind (zum Beispiel aus einem GIS-System (Geographic Information System)), können auch diese bei der Zuordnung entsprechend berücksichtigt werden.

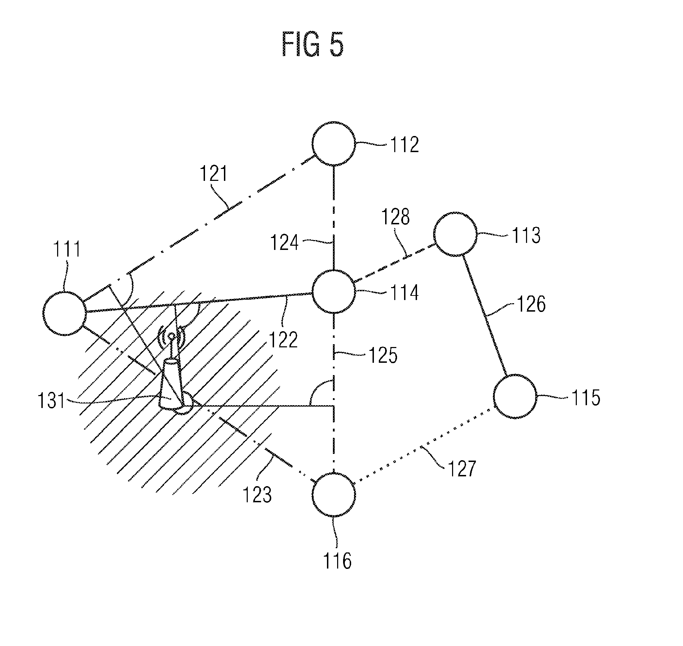

Fig. 5 zeigt das oben ausgeführte Fällen eines Lots zum Bestimmen eines Wirkungswerts. Dabei wird der Lot vom Bezugspunkt des Messwerts auf eine von der Messung betroffene Kante gefällt. In Fig. 5 stellt der Bezugspunkt den Standort der Messvorrichtung 131 dar. Dabei werden beispielhaft vier Lote gefällt: auf die Kanten 121, 122, 123 und 125.

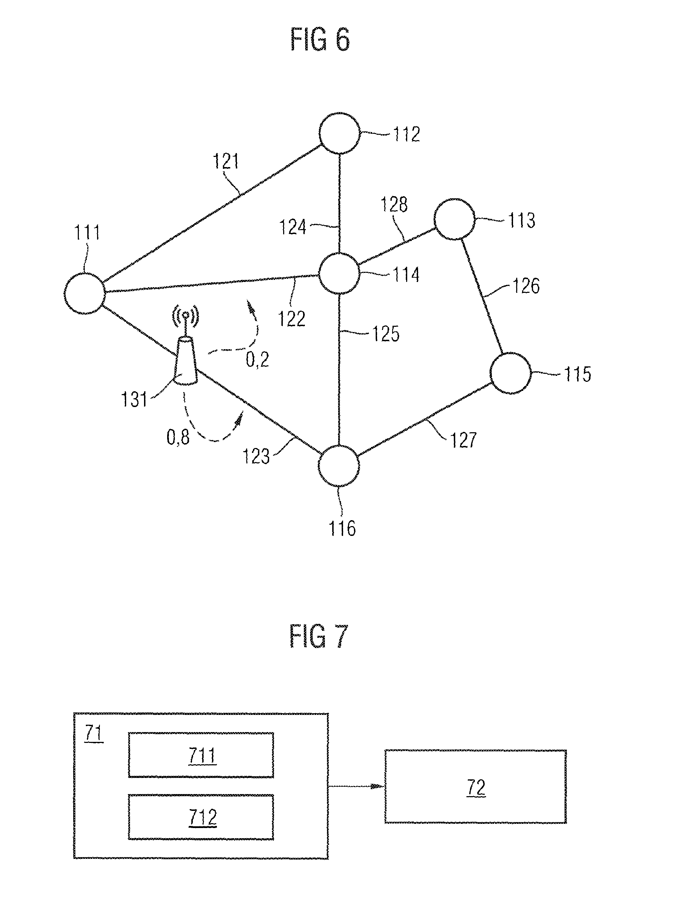

Fig. 6 zeigt die zugeordneten Wirkungswerte den von einer Messung betroffenen Einheiten nach dem Fällen der Lote (wie in Fig. 5), wenn die Messung ein räumlich beschränktes Phänomen gemessen hat. Weist die Wirkungsfunktion einen Wertebereich von Null bis Eins auf, so erhält die Kante 123, die der Messvorrichtung am nächsten ist den Wirkungswert 0,8. Die Kante 122, die von der Messvorrichtung am Entferntesten ist erhält den Wirkungswert 0,2.

Fig. 7 zeigt ein Flussdiagramm mit Schritten zum Zuordnen von Messdaten zu Einheiten eines Infrastrukturnetzes gemäß einem Ausführungsbeispiels der vorliegenden Erfindung.

In Schritt 71 wird ein Graph, der das Infrastrukturnetz räumlich darstellt, und eine räumliche Baumstruktur, welche die Kanten des Graphen indiziert, bereitgestellt. Der Schritt 71 weist beispielhaft das Bereitstellen 711 des Graphen und das Bereitstellen 712 der räumlichen Baumstruktur als zwei einzelne Schritte auf. Die Schritte 711 und 712 können aber auch ein einzelner Schritt sein.

In Schritt 72 werden Messdaten für das Infrastrukturnetz in einem bestimmten geographischen Raum oder Bereich gesucht. Der relevante Raum oder Bereich wird mit einem Polygon spezifiziert. Analog zur in der Beschreibung der Fig. 4 erläuterten Suche nach relevanten Kanten für das Wirkungsgebiet eines Messwertes, werden anhand des gegebenen Polygons ausgehend vom Wurzelknoten des räumlichen Baums rekursiv die relevanten Teilbäume ermittelt, bis die relevanten (im geographischen Raum oder Bereich liegenden) Kanten des Infrastrukturgraphen bzw. die relevanten Verbindungen zwischen den strukturellen Elementen des Infrastrukturnetzes bestimmt sind. Die den relevanten Kanten des Graphen zugeordneten Messdaten bilden die Menge der gesuchten Messdaten. Anzumerken ist, dass statt eines Polygons auch andere geometrische Formen zur Einschränkung des räumlichen Baums im Hinblick auf den vorgegebenen Raum oder Bereich verwendet werden können.

Obwohl die Erfindung oben mit Bezug auf die Ausführungsbeispiele gemäß der beiliegenden Figuren der Zeichnung erklärt wird, ist es ersichtlich, dass die Erfindung nicht auf diese beschränkt ist, sondern innerhalb des Bereichs der oben und in den anhängigen Ansprüchen offenbarten erfinderischen Idee modifiziert werden kann. Es versteht sich von selbst, dass es noch weitere Ausführungsformen geben kann, die den Grundsatz der Erfindung darstellen und äquivalent sind, und dass somit verschiedene Modifikationen ohne Abweichen vom Umfang der Erfindung implementiert werden können. Insbesondere wird durch die Erfindung eine generische Lösung geboten, welche verschiedene Arten von Infrastrukturnetzen, Messdaten und Messvorrichtungen beim Betreiben eines Infrastrukturnetzes anbietet. Des Weiteren können auch zu der in Ausführungsbeispielen dargelegten Indexstruktur einer räumlichen Baumstruktur adäquate Datenstrukturen eingesetzt werden, was eine Gestaltungsfreiheit bei der Umsetzung der Erfindung mit sich bringt.

## Patentansprüche

1. Verfahren zum Zuordnen von Messdaten zu Einheiten eines Infrastrukturnetzes, wobei das Infrastrukturnetz als Einheiten eine Menge struktureller Elemente, die durch die strukturellen Elemente darstellende Knoten eines Graphen repräsentiert werden, sowie eine Menge von Verbindungen zwischen den strukturellen Elementen umfasst, wobei die Menge von Verbindungen durch die Verbindungen zwischen den strukturellen Elementen darstellende Kanten des Graphen repräsentiert wird, mit den Schritten:
Bereitstellen einer räumlichen Baumstruktur, welche die Kanten des Graphen indizierende Blattknoten aufweist;
Ermitteln mittels der räumlichen Baumstruktur mindestens einer Einheit des Infrastrukturnetzes, die von einer in dem Infrastrukturnetz durchgeführten Messung betroffen ist, wobei die durchgeführte Messung einen Ortsbezug aufweist und zumindest einen Messwert mit dem Ortsbezug bereitstellt; und Zuordnen eines Wirkungswerts der mindestens einen Einheit, wobei der Wirkungswert anzeigt, zu welchem Anteil die durchgeführte Messung für die mindestens eine Einheit relevant ist.

2. Verfahren nach Anspruch 1,
wobei das Verfahren ferner das Bestimmen des Wirkungswerts mittels einer Wirkungsfunktion umfasst, die entsprechend der Art der durchgeführten Messung ausgestaltet ist.

3. Verfahren nach einem der vorstehenden Ansprüche,
bei welchem das Ermitteln der mindestens einen Einheit Suchen nach einer von der durchgeführten Messung betroffenen Menge von Kanten des Graphen in der räumlichen Baumstruktur umfasst, wobei das Suchen nach der Menge von Kanten den Ortsbezug der durchgeführten Messung berücksichtigt.

4. Verfahren nach einem der vorstehenden Ansprüche,
bei dem Indexknoten der räumlichen Baumstruktur jeweils minimal umgebenden räumlichen Bereich von Einheiten des Infrastrukturnetzes von darunterliegenden Teilbäumen indizieren, und Wurzelknoten der räumlichen Baumstruktur einen das Infrastrukturnetz minimal umgebenden räumlichen Bereich indiziert, und bei dem während des Suchens nach der Menge von Kanten nur diejenigen Indexknoten und Blattknoten berücksichtigt werden, die räumliche Bereiche indizieren, die zumindest zum Teil von der durchgeführten Messung betroffen sind.

5. Verfahren nach Anspruch 4,
bei dem alle von unter dem Indexknoten liegenden Blattknoten indizierten Kanten in die Menge von Kanten aufgenommen werden, wenn ein Indexknoten einen räumlichen Bereich indiziert, der vollständig im von der durchgeführten Messung betroffen Bereich liegt.

6. Verfahren nach einem der vorstehenden Ansprüche,
bei dem die mindestens eine Einheit eine Verbindung ist, die von einer Kante aus der Menge von Kanten dargestellt wird, oder ein strukturelles Element ist, das von einem Knoten dargestellt wird, der durch die Kante aus der Menge von Kanten im Graph verbunden wird.

7. Verfahren nach Anspruch 2 und 6,
bei dem das Bestimmen des Wirkungswerts die Schritte umfasst: Fällen eines Lots von dem Ortsbezug des Messwerts auf die Kante;
Bestimmen der Länge des Lots; und
Einbeziehen der Länge des Lots in die Wirkungsfunktion und in das Bestimmen des Wirkungswerts.

8. Verfahren zum Suchen von Messdaten von Messungen, die sich auf einen vorgegebenen räumlichen Bereich eines Infrastrukturnetzes beziehen, wobei den Einheiten des Infrastrukturnetzes Messdaten entsprechend einem Verfahren nach einem der vorstehenden Ansprüche zugeordnet werden und wobei zum Suchen von Messdaten die räumliche Baumstruktur verwendet wird.

9. Verfahren zum Betreiben eines Infrastrukturnetzes,
wobei das Verfahren das Bereitstellen eines Graphen und einer räumlichen Baumstruktur aufweist,
wobei das Infrastrukturnetz als die Einheiten eine Menge struktureller Elemente, die durch die strukturellen Elemente darstellende Knoten des Graphen repräsentiert werden, sowie eine Menge von Verbindungen zwischen den strukturellen Elementen umfasst,
wobei die Menge von Verbindungen durch die Verbindungen zwischen den strukturellen Elementen darstellende Kanten des Graphen repräsentiert wird, und wobei die räumliche Baumstruktur die Kanten des Graphen indizierende Blattknoten aufweist.

10. Verfahren nach Anspruch 9,
bei dem der Graph und die räumliche Baumstruktur für zumindest einen der folgenden Schritte bereitgestellt wird:
Zuordnen von ortsbezogenen Messdaten zu Einheiten eines Infrastrukturnetzes; und
Suchen von Messdaten zu Einheiten eines Infrastrukturnetzes.

11. Vorrichtung zum Betreiben eines Infrastrukturnetzes,
wobei das Infrastrukturnetz als Einheiten eine Menge struktureller Elemente, die durch die strukturellen Elemente darstellende Knoten eines Graphen repräsentiert werden, sowie eine Menge von Verbindungen zwischen den strukturellen Elementen aufweist, wobei die Menge von Verbindungen durch die Verbindungen zwischen den strukturellen Elementen darstellende Kanten des Graphen repräsentiert wird:
mit einer Datenverwaltungseinrichtung, die ausgebildet ist, eine räumliche Baumstruktur zu verwalten, welche die Kanten des Graphen indizierende Blattknoten aufweist,
mit einer Ermittlungseinrichtung, die dazu ausgebildet ist, mittels der räumlichen Baumstruktur mindestens eine Einheit des Infrastrukturnetzes, die von einer in dem Infrastrukturnetz durchgeführten Messung betroffen ist, zu ermitteln, wobei die durchgeführte Messung einen Ortsbezug aufweist und zumindest einen Messwert mit dem Ortsbezug bereitstellt, und mit einer Zuordnungseinrichtung, die dazu ausgebildet ist, einen Wirkungswert der mindestens einen Einheit zuzuordnen, wobei der Wirkungswert anzeigt, zu welchem Anteil die durchgeführte Messung für die mindestens eine Einheit relevant ist.

12. Vorrichtung nach Anspruch 11,
mit einer weiteren Datenverwaltungseinrichtung, wobei mindestens eine der Datenverwaltungseinrichtungen dazu ausgebildet ist, den Graphen zu verwalten.

13. Vorrichtung nach einem der vorstehenden Ansprüche,
mit einer Sucheinrichtung, die dazu ausgebildet ist, Messdaten von Messungen, die sich auf einen vorgegebenen räumlichen Bereich eines Infrastrukturnetzes beziehen, zu suchen, wobei die Messungen den Einheiten des Infrastrukturnetzes durch die Zuordnungseinrichtung zugeordnet sind und wobei die Sucheinrichtung ferner dazu ausgebildet ist, die räumliche Baumstruktur zum Suchen von Messdaten zu verwenden.

14. Vorrichtung zum Betreiben eines Infrastrukturnetzes, die eine Bereitstellungseinrichtung aufweist, die dazu ausgebildet ist, einen Graphen und eine räumliche Baumstruktur bereitzustellen,
wobei das Infrastrukturnetz als Einheiten eine Menge struktureller Elemente, die durch die strukturellen Elemente darstellende Knoten des Graphen repräsentiert werden, sowie eine Menge von Verbindungen zwischen den strukturellen Elementen aufweist, wobei die Menge von Verbindungen durch die Verbindungen zwischen den strukturellen Elementen darstellende Kanten des Graphen repräsentiert wird und
wobei die räumliche Baumstruktur die Kanten des Graphen indizierende Blattknoten aufweist.

15. Vorrichtung nach Anspruch 14,
bei der die Bereitstellungseinrichtung ausgebildet ist, den Graphen und die räumliche Baumstruktur zum Zuordnen von ortsbezogenen Messdaten zu Einheiten eines Infrastrukturnetzes bereitzustellen.

16. Vorrichtung nach Anspruch 14 oder 15,
bei der die Bereitstellungseinrichtung ausgebildet ist, den Graphen und die räumliche Baumstruktur zum Suchen von Messdaten zu Einheiten eines Infrastrukturnetzes bereitzustellen.

17. System zum Betreiben eines Infrastrukturnetzes,
mit zumindest einer Vorrichtung nach einem der Ansprüche 11 bis 13 und/oder
mit mindestens einer Vorrichtung nach einem der Ansprüche 14 bis 16.

18. Datenstruktur zum Betreiben von für ein Infrastrukturnetz relevanten Informationen, wobei die Datenstruktur einen Graphen und eine räumliche Baumstruktur aufweist,
wobei das Infrastrukturnetz als Einheiten eine Menge struktureller Elemente, die durch die strukturellen Elemente darstellende Knoten des Graphen repräsentiert werden, sowie eine Menge von Verbindungen zwischen den strukturellen Elementen aufweist, wobei die Menge von Verbindungen durch die Verbindungen zwischen den strukturellen Elementen darstellende Kanten des Graphen repräsentiert wird, und
wobei die räumliche Baumstruktur die Kanten des Graphen indizierende Blattknoten aufweist.

19. Computerprogramm, insbesondere auf einem Datenträger gespeichertes Computerprogramm, das eine Kodierung aufweist, mittels der Schritte zumindest des Verfahrens nach einem der Ansprüche 1 bis 7, des Verfahrens nach Anspruch 8 und/oder des Verfahrens nach Anspruch 9 oder 10 ausgeführt werden.
